# EUROPEAN PATENT APPLICATION

(11) **EP 4 806 602 A1**
(43) Date of publication of application: **16.09.2026**
(21) Application number: 24900273.4
(22) Date of filing: 03.10.2024
(51) Int. Cl.: B25J 13/08, D06F 67/04, G06T 7/70

(54) **SHEET MATERIAL PROCESSING METHOD, PROCESSING SYSTEM, AND PROGRAM**

(30) Priority: 07.12.2023 JP 2023207265
(71) Applicant: Totofolder Manufacturing Co., Ltd., Kawaguchi-shi, Saitama 333-0843 (JP)
(72) Inventor: MAESHIMA, Yusuke, Kawaguchi-shi, Saitama 333-0843 (JP); KOBAYASHI, Noriyuki, Kawaguchi-shi, Saitama 333-0843 (JP); YAMAMOTO, Kazuyuki, Kawasaki-shi, Kanagawa 212-0032 (JP); KAWABATA, Shinji, Kawasaki-shi, Kanagawa 212-0032 (JP)
(74) Representative: IK-IP LTD
(86) International application number: PCT/JP2024/035400
(87) International publication number: WO 2025/120976

(57) **Abstract**

[Problem] Provided is a processing method capable of determining an appropriate gripping position to expose a feature amount of a sheet material at a preceding stage so that, even in a state where a large object is placed in a disorderly manner, work can be performed by eventually exposing its corner.

[Solution] The present invention of the present application that solves the above-described problem is a processing method X for causing a computer to execute processing for determining a gripping position, which is appropriate, on a sheet material Z in an arbitrary state, the processing method X including: an image acquisition step S1 of imaging the sheet material Z to acquire image data, a detection step S2 of detecting feature amounts F included in the image data, and a position determination step S3 of determining the gripping position by using the feature amounts F.

## Description

### TECHNICAL FIELD

The present invention relates to a processing method for recognizing a form of a sheet material placed in a disorderly manner and detecting an appropriate portion to be gripped, at a stage before automatically folding a sheet material such as a sheet, and a processing system that executes the processing.

### BACKGROUND ART

In linen supply industries and lodging facilities such as hotels, a large amount of sheet material is handled for sheet replacement, washing, and the like. In particular, to neatly fold a sheet material having a size equal to or larger than that of a human body, such as a sheet and a bath towel, a corresponding amount of labor is required. Therefore, it is preferable to automate work of folding a sheet material, and an applicant of the present application has developed a folding device therefor.

On the other hand, in a step of feeding a sheet material such as a sheet into the folding device, it is necessary to align a form and orientation of the sheet material to some extent. With respect to this work, since it has been handled by opening the sheet material by human hands and distinguishing a type of the sheet material, automation of this step has been demanded. In this regard, a device that utilizes characteristic elements such as corners and patterns of a sheet material has been developed as in Patent Document 1 or 2.

### Related Art Documents

### Patent Documents

Patent Document 1: U.S. Patent No. 9,909,252
Patent Document 2: Japanese Patent Application Publication No. 2023-011021

### SUMMARY OF INVENTION

### TECHNICAL PROBLEM

Patent Document 1 discloses a system that targets a small sheet material such as a towel and recognizes and grips its four corners. However, for a large object such as a sheet or a bath towel, it is difficult to recognize its four corners from a state in which the object is placed in a disorderly manner, such as being rolled up. Therefore, it is necessary to automate a process of reliably exposing its corners and mechanically gripping the corners regardless of a size of the sheet material.

Patent Document 2 discloses a system that determines a pattern of laundry by image recognition. However, in order to recognize the pattern, it has been necessary to spread out and place an object, and having only this portion involve human hands has been rather inefficient.

The present invention has been made in view of the above-described actual circumstances, and provides a processing method capable of determining an appropriate gripping position to expose a feature amount of a sheet material in a preceding stage so that, even in a state where a large object is placed in a disorderly manner, work can be performed by eventually exposing its corners.

### SOLUTION TO PROBLEM

The present invention of the present application that solves the above-described problem is a processing method for causing a computer to execute processing of determining a gripping position, which is appropriate, on a sheet material in an arbitrary state, the processing method including: an image acquisition step of imaging the sheet material to acquire image data, a detection step of detecting feature amounts included in the image data, and a position determination step of determining the gripping position by using the feature amounts.

According to the present invention, it is possible to grip a large sheet material at an appropriate gripping position without intervention of human hands and to deliver the sheet material to a next step for exposing a corner of the sheet material.

In a preferred embodiment of the present invention, the detection step determines a segment of edge elements included in the sheet material by using the feature amounts, and the position determination step determines the gripping position based on the segment.

With such a configuration, it is possible to grip a vicinity of a side of the sheet material using image recognition.

In a preferred embodiment of the present invention, the edge elements are provided along an edge of the sheet material, the detection step determines continuity of a plurality of the segments, including the segment, groups a plurality of segments, including the segment, determined to have the continuity into a group, and the position determination step determines the gripping position by using an element of the group.

With such a configuration, it is possible to recognize the edge element with high accuracy even in a state in which the edge element is visually recognized in a curved shape.

In a preferred embodiment of the present invention, the sheet material has the edge elements that are distinguishable for each edge, the detection step distinguishes each of the edge elements from the feature amounts into groups, and the position determination step determines, as the gripping position, one point that matches a predetermined condition, from a feature amount corresponding to each of the groups.

With such a configuration, it is possible to enable gripping a vicinity of a long side of the sheet material as much as possible and to easily lift the sheet material.

In a preferred embodiment of the present invention, when a plurality of gripping positions, including the gripping position, are determined, the position determination step determines, as the gripping positions, a set of points that are separated from each other by a predetermined linear distance within the segments determined to have the continuity.

With such a configuration, even when the sheet material is gripped at a plurality of positions, it is possible to grip and lift the sheet material at appropriate gripping positions.

In a preferred embodiment of the present invention, when a plurality of gripping positions, including the gripping position, are determined, the position determination step determines, as the gripping positions, a set of points that are separated from each other by a predetermined geodesic distance within the segments determined to have the continuity.

With such a configuration, even when the sheet material is gripped at a plurality of positions, it is possible to grip and lift the sheet material at more appropriate gripping positions in accordance with the shape of the sheet material.

The present invention of the present application that solves the above-described problem is a program for determining a gripping position, which is appropriate, on a sheet material in an arbitrary state by causing a computer to function as: an image acquisition unit that images the sheet material to acquire image data; a detection unit that detects feature amounts included in the image data; and a position determination unit that determines the gripping position of the sheet material by using the feature amounts.

With such a configuration, a corner of a large sheet material is exposed without using human hands, so that the sheet material can be gripped at an appropriate gripping position and delivered to a next step.

The present invention of the present application that solves the above-described problem is a processing system in which a computer executes processing for determining a gripping position, which is appropriate, on a sheet material in an arbitrary state, the processing system including: an image acquisition unit that images the sheet material to acquire image data; a detection unit that detects feature amounts included in the image data, and a position determination unit that determines the gripping position by using the feature amounts.

With such a configuration, a corner of a large sheet material is exposed without using human hands, so that the sheet material can be gripped at an appropriate gripping position and delivered to a next step.

### EFFECT OF THE INVENTION

According to the present invention, it is possible to provide a processing method capable of recognizing a feature amount and determining a more appropriate gripping position even in a state where a large object is placed in a disorderly manner.

### BRIEF DESCRIPTION OF THE DRAWINGS

FIG. 1 is a flowchart of a processing method in a first embodiment of the present invention.
FIG. 2 is a flowchart of the processing method in the first embodiment of the present invention.
FIG. 3 is a block diagram of hardware for executing the processing method in the first embodiment of the present invention.
FIG. 4 is a schematic diagram of the hardware for executing the processing method in the first embodiment of the present invention.

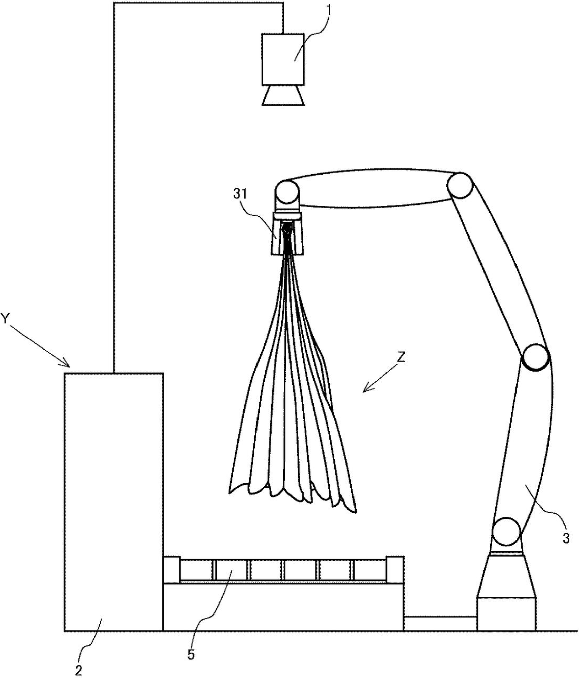

FIG. 5 is a schematic diagram of hardware for executing the processing method in the first embodiment of the present invention.
FIG. 6 is an image illustrating an image recognition state of a feature amount in the first embodiment of the present invention.
FIG. 7 is an image illustrating the image recognition state of the feature amount in the first embodiment of the present invention.
FIG. 8 is a table illustrating a detection pattern of a feature amount and branching of processing corresponding thereto in the first embodiment of the present invention.
FIG. 9 is a schematic diagram of hardware for executing a processing method in a second embodiment of the present invention.

### DESCRIPTION OF EXEMPLARY EMBODIMENTS

Hereinafter, a processing method X according to each embodiment of the present invention will be described with reference to the drawings. The description will be detailed in order of a configuration of the embodiment, a method of implementation, and other examples.

Note that each embodiment shown below is an example of the present invention, and the present invention is not limited to the embodiments below.

### <First Embodiment>

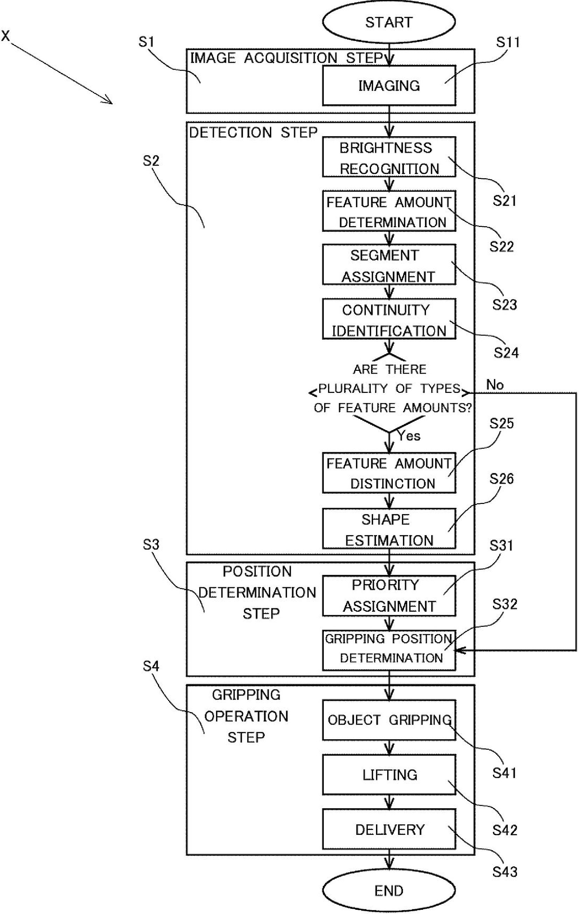

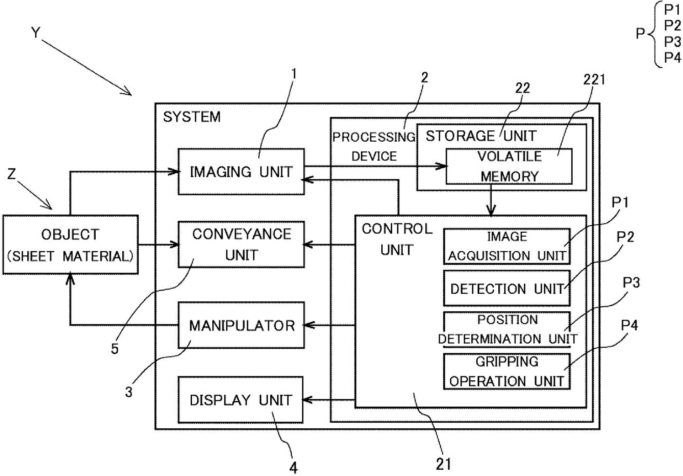

The processing method X according to the present embodiment includes, as illustrated in FIG. 1, an image acquisition step S1, a detection step S2, and a position determination step S3, and further includes a gripping operation step S4 of gripping a sheet material Z at a gripping position of the sheet material Z determined in the position determination step S3, lifting the sheet material Z, and delivering the sheet material Z to a next system. Further, the processing method X is executed by a processing system Y illustrated in FIG. 3.

### <<Processing System>>

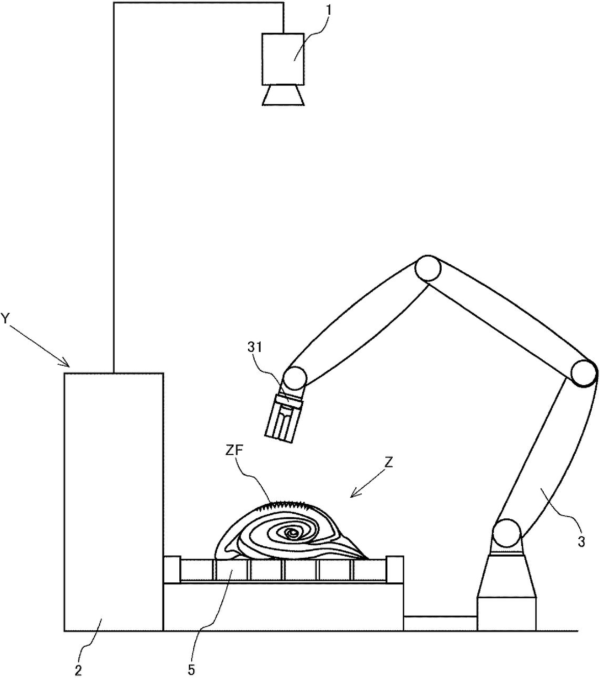

As illustrated in FIG. 4, the processing system Y is a system of devices that execute the processing method X for gripping the sheet material Z at an appropriate position and delivering the sheet material Z to a downstream step, and includes an imaging unit 1, a processing device 2, a manipulator 3, a display unit 4 (not illustrated), and a conveyance unit 5.

The imaging unit 1 is a camera (a line camera or an area camera) that captures an image of the sheet material Z as an object with information on brightness, saturation, and hue, and a configuration having a light source unit is preferable for more reliable image recognition.

As illustrated in FIG. 3, the processing device 2 is a computer device including a control unit 21 and a storage unit 22, and further includes an input device, a storage device, an interface, and the like. The processing system Y, by the processing device 2, controls the imaging unit 1, the manipulator 3, the display unit 4, and the conveyance unit 5, and also executes each processing related to image recognition.

The control unit 21 is an arithmetic device such as a CPU (processor) or a microcomputer, and executes instructions executable by a computer.

The storage unit 22 includes a nonvolatile memory that stores a program P for executing the processing method X according to the present embodiment, and a volatile memory 221 that temporarily stores image data captured by the imaging unit 1, and data and the program P are read out from each and executed by the control unit 21. However, as illustrated in FIG. 3, the storage unit 22 does not need to have the nonvolatile memory and the volatile memory 221 clearly separated, and may be provided integrally as long as it can fulfill the above-described roles.

In the storage unit 22, the program P for executing each processing according to the present embodiment is stored. The program P causes the processing device 2, particularly the control unit 21, to function as an image acquisition unit P1, a detection unit P2, a position determination unit P3, and a gripping operation unit P4.

The image acquisition unit P1 controls the imaging unit 1 to capture an image of the sheet material Z, and acquires the captured image so that the captured image can be handled as image data by the control unit 21.

The detection unit P2 includes a brightness recognition unit P21 that detects unevenness on a surface of the sheet material Z appearing in image data by using brightness, a determination unit P22 that determines presence or absence of a feature amount F by using a distribution of brightness in a specific region in the image data, an assignment unit P23 that assigns a bounding box B to the feature amount F, a continuity identification unit P24 that identifies continuity of the feature amount F by connecting the bounding boxes B, a distinction unit P25 that performs grouping for each feature amount F at a different position or in a different mode, and a shape estimation unit P26 that estimates a position of an edge portion ZH based on a mode of a detected feature amount F and further estimates, depending on a detection status of the feature amount F, a type of the edge portion ZH of the sheet material Z.

The position determination unit P3 includes a priority assignment unit P31 that assigns, for each group of the feature amount F, a priority for selection as a gripping position, and a provisional selection unit P32 that temporarily selects a candidate for the gripping position from the feature amount F whose continuity has been identified.

The gripping operation unit P4 controls the manipulator 3 to grip and lift the sheet material Z (object) at a determined gripping position, and delivers the sheet material Z to a next step.

Hereinafter, a behavior when processing is executed by each unit of the program P will be described in detail in description of a corresponding step.

The manipulator 3 is a so-called robot arm that includes an end effector 31 capable of gripping the sheet material Z and that lifts and conveys the sheet material Z, and a configuration that operates with six degrees of freedom (for example, a configuration having four shaft joints) is preferable. In addition, the end effector 31 preferably has a configuration including a suction unit that sucks the sheet material Z and a pair of grippers that sandwich a vicinity thereof, in order to reliably maintain a state in which the sheet material Z is gripped.

The display unit 4 is a display that displays captured image data and a progress of image recognition, and a liquid crystal screen or the like is used. Thus, a user can check a status of image recognition of the sheet material Z, and, even when a way the sheet material Z is placed is not appropriate, can visually recognize this and make a correction such as repositioning the sheet material Z. In addition, the display unit 4 may have a configuration that also serves as an input device as a touch panel.

The conveyance unit 5 is a movable placement table on which the user places the sheet material Z and that transports the sheet material Z to an imaging range of the imaging unit 1, and an embodiment using a belt conveyor or the like is assumed. In addition, the conveyance unit 5 is preferably configured in a color greatly different from that of the sheet material Z, particularly a dark color such as black, in order to facilitate recognition of the sheet material Z.

The sheet material Z is a cloth material including an edge element ZF used for image recognition, and in the present embodiment, a material mainly assumed is of a size that does not fit in one hand of a person, such as a face towel, a bath towel, or a sheet used for bedding. However, a relatively small item such as a hand towel or a handkerchief may be applied to the present embodiment. In the following description, for convenience of description, a cloth material appearing in an image may also be referred to as the sheet material Z; but in that case, it refers to data on the image corresponding to the sheet material Z.

The edge element ZF is provided along the edge portion ZH of the sheet material Z, and is a portion serving as a mark (or clue) for identifying the edge portion ZH in the processing method X according to the present embodiment. The actual edge element ZF is, for example, a location where colored thread, a pattern, a woven pattern, presence/absence of pile, or the like changes, that is, a region near the edge portion ZH of the sheet material Z in which a mode of threads (sewing) changes.

More specifically, it refers to a portion, such as a hem, a selvage or the like included in a general towel or sheet, at which the edge portion ZH of the sheet material Z can be visually recognized due to a change in a sewing pattern. In addition, it is preferable that a woven pattern appearing due to a change in weave, a flat portion of a towel (a region to which no pile is attached), a portion on which a pattern, characters, or the like is printed afterward, and the like are also treated as the edge element ZF.

The feature amount F is an index based on numerical data representing a state in which the sheet material Z is imaged by the imaging unit 1 and the edge element ZF appears in the captured image. Specifically, it is the position, color, and orientation of the edge element ZF on the image, and more specifically indicates, for example, how much a value of each data assigned to each pixel, such as brightness or RGB, changes between adjacent pixels or within a predetermined region of the image.

Even for the same sheet material Z, the index used for the feature amount F changes depending on its state. For example, it is assumed that a way of rolling changes how light is applied, and even for colored thread of a same color, RGB values differ on an image, and similarly brightness values differ. In addition, it is assumed that even in a plain sheet material Z, repeated use and washing causes threads (particularly pile) to wear down, and a distribution (pattern) of brightness appearing in an image changes.

In order to avoid variations in recognition of the feature amount F due to the above, it is preferable that a detection criteria for the feature amount F be configured to be able to respond to a certain degree of variation. However, the detection criteria for the feature amount F may be configured on a rule basis, such as by setting a predetermined parameter in advance, or may be formed by learning.

Hereinafter, the method of implementation according to the present embodiment will be described in detail with reference to the drawings. In addition, the method of implementation described below is merely an example, and the method of implementation is not limited thereto, and the order may be changed.

### <<Processing Method>>

Each program P according to the present embodiment stored in the storage unit 22, and the processing method X executed thereby proceed in accordance with the flowchart shown in FIG. 1.

The image acquisition step S1 (corresponding to the image acquisition unit P1) includes an imaging step S11 of imaging the sheet material Z with the imaging unit 1.

In the imaging step S11, the control unit 21 controls the imaging unit 1 to perform color imaging on the sheet material Z, reads a captured image data for use in the next detection step S2, simultaneously stores the captured image data in the storage unit 22 (particularly, the volatile memory 221), and further displays the captured image data on the display unit 4. At this time, it is preferable that the control unit 21 also perform processing of recognizing a timing at which the sheet material Z placed in a disorderly manner (or conveyed by the conveyance unit 5) has stopped, and automatically capturing an image. By such processing, the user only needs to place the sheet material Z in the imaging range, and it is possible to prevent a delay in a system operation due to forgetting to perform an operation.

The control unit 21 may, for the captured image, simultaneously perform processing of trimming an unnecessary portion in accordance with a position of the sheet material Z in the image.

The detection step S2 (corresponding to the detection unit P2) includes a brightness recognition step S21, a determination step S22 for determining presence or absence of the feature amount F, an assignment step S23 for assigning the bounding box B to the recognized feature amount F, and a continuity identification step S24 for identifying continuity of the feature amount F. Further, the detection step S2 preferably includes a distinction step S25 for distinguishing a plurality of types of feature amounts F, and a shape estimation step S26 for estimating a shape of the sheet material Z, particularly types of sides (such as a long side and a short side), based on the type of the feature amount F.

In the brightness recognition step S21, the control unit 21 extracts brightness data from the read image data. In this processing, the control unit 21 performs two types of macro extraction and micro extraction.

In the macro extraction, the control unit 21 first divides a region in which the sheet material Z appears in the read image into regions of a predetermined size (for example, a 10-pixel square or the like), subsequently calculates an average value of brightness of pixels included in each region, further compares the average value of the brightness between two adjacent regions, and, if a difference between the average values at this time is equal to or less than a predetermined value (for example, 20 or less), determines that the two predetermined regions belong to a same region of the sheet material Z.

After the above-described macro extraction processing, the control unit 21 executes the micro extraction processing. In this micro extraction, the control unit 21 recognizes, in the regions determined to be within the same region by the macro extraction, a pattern in which a brightness value varies each time the position is shifted by one pixel. That is, the control unit 21 recognizes a change in light and shade between pixels.

This brightness recognition step S21 can be replaced with color recognition processing (a color recognition step). In this case, the control unit 21 replaces the brightness data for each pixel used for detection with colors, that is, respective RGB values, and performs macro extraction or micro extraction. Further, the brightness recognition step S21 may be a processing step in which brightness and colors (RGB values) are used in combination.

In the determination step S22, the control unit 21 recognizes a change in the brightness pattern within one region of the sheet material Z recognized in the brightness recognition step S21, or compares the recognized brightness pattern with data stored in advance in the storage unit 22. Then, when the control unit 21 finds a location where a pattern of change in brightness greatly changes, the control unit 21 determines that the location is a location of change in a sewing pattern and is a portion of the feature amount F where a woven pattern or the like changes.

Accordingly, the processing system Y can handle, as the feature amount F, elements included in general plain towels and sheets, such as presence or absence of a hem, a selvage, and a pile.

The brightness value used in the brightness recognition step S21 and the determination step S22 utilizes a principle in which unevenness due to sewing of the sheet material Z is recognized as brightness through reflection of light. With such a configuration, even when the sheet material Z is plain, the control unit 21 can recognize the feature amount F.

In the brightness recognition step S21 and the determination step S22, the control unit 21 mainly performs detection using numerical values related to brightness; however, when colors (RGB numerical values) are usable, such as when the edge element ZF is colored thread, it is preferable to detect the feature amount F by using numerical values related to color.

In the assignment step S23, the control unit 21 first assigns segments to respective pixels so as to match the recognized feature amount F, and further assigns a rectangular bounding box B to an aggregate of the segments. Preferably, the control unit 21 causes a result of assigning the bounding box B to be displayed on the display unit 4.

The bounding box B is an icon that is assigned to one section obtained by partitioning an aggregate of assigned segments into lengths equal to or less than a predetermined length. In the bounding box B, a length of a side oriented in a length direction (continuity direction) of the feature amount F (aggregate of segments) is arbitrary as long as the length is equal to or less than a predetermined length, and sides in a direction of partitioning the feature amount F all have a constant length.

In the assignment step S23, the control unit 21 assigns a plurality of bounding boxes B along the feature amount F, and proceeds to the next step.

When there are a plurality of types of feature amounts F, the control unit 21 reflects a result of the distinction step S25 (described later) by combining with different data, such as changing the color (balance of respective RGB values) of the bounding box B for each group.

In the continuity identification step S24, for a plurality of bounding boxes B, the control unit 21 identifies continuity of the feature amount F by associating the bounding boxes B with each other when the bounding boxes B intersect or contact at an end portion in the length direction (or at an arbitrary position of a short side), or are proximate (as determined by, for example, the number of separated pixels being less than a predetermined value). By this processing being performed on an image, the edge elements ZF having continuity are substantially recognized.

Here, "continuity" refers to a region in which a plurality of pixels recognized as the feature amount F are located adjacent to each other, or a group of a plurality of associated bounding boxes B.

Note that, when only the feature amount F is handled and the bounding box B is not used, the assignment step S23 and the continuity identification step S24 are omitted. Further, when there is one bounding box B, the continuity identification step S24 is omitted.

The continuity identification step S24 may be processing in which the control unit 21 determines proximity of segments, performs association between segments or between aggregates of segments, and as a result, the bounding boxes B are connected to each other.

In the control unit 21 in the processing method X illustrated in FIG. 1, in the distinction step S25, upon receiving the processing of the continuity identification step S24, when it is determined that feature amounts F whose continuity has been identified can be divided into a plurality of groups, or that there are a plurality of types, the control unit 21 groups the feature amounts F.

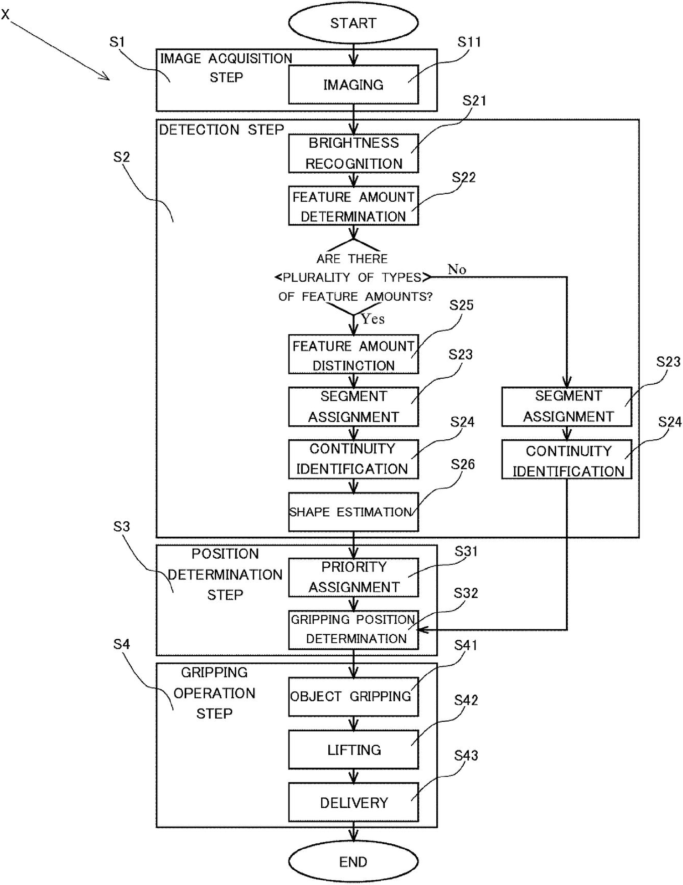

Separately from the above, in the distinction step S25, as illustrated in FIG. 2, the control unit 21 may perform processing in an order in which, at a stage when the determination step S22 has ended, when it is determined that there are a plurality of types of patterns or distribution locations of the feature amounts F, the feature amounts F are grouped in accordance with the types.

Further, when one or less type of recognized feature amount F exists, the control unit 21 does not perform the processing of the distinction step S25 and proceeds to the next step.

In the shape estimation step S26, the control unit 21 estimates a position of the edge ZH of the sheet material Z based on a position and continuity of the detected feature amount F and a length direction thereof, and then estimates, based on a mode of the feature amount F, a type of the edge ZH that can exist in a vicinity of the edge element ZF corresponding to the feature amount F. At this time, the control unit 21 particularly determines the long side and the short side of the sheet material Z.

The shape estimation step S26 is preferably incorporated in the processing method X when the edge elements ZF are provided along the edge ZH of the sheet material Z. For example, in a general towel, the edge elements ZF each having a different sewing mode are provided on sides having different lengths, such as a selvage along a long side and a hem along a short side, and the control unit 21 identifies these. As a result, in the position determination step S3 and the gripping operation step S4, the manipulator 3 can more easily grip a position at which the sheet material Z is easy to handle, and errors in work for conveying the sheet material Z can be reduced.

The position determination step S3 (corresponding to the position determination unit P3) includes a priority assignment step S31 and a gripping position determination step S32, and in this, the control unit 21 determines a gripping position of the sheet material Z using the feature amount F identified in the detection step S2.

In the priority assignment step S31, the control unit 21 assigns, to each group of bounding boxes B (or rather, the feature amounts F) grouped in the distinction step S25, a priority to be determined as the gripping position. This priority is, for example, a numerical value, and is assigned as "1", "2", "3", and so on in this order from a group that is most likely to be set as the gripping position. Based on the assigned priority, in the gripping position determination step S32, the gripping position is determined starting from a group having the smallest numerical value of the priority.

In the priority assignment step S31, the control unit 21 first compares lengths over which the grouped bounding boxes B (segments) are continuous, and assigns numerical values of priorities in order from the longest.

Subsequently, the control unit 21 identifies coordinates of a midpoint of each group (XY coordinates in the image), and determines whether or not each coordinate is inside a prohibited region (including a boundary). This prohibited region refers to a region in which the end effector 31 interferes with an object other than the sheet material Z and is unable to grip the sheet material Z, such as an edge of the conveyance unit 5 or a vicinity of a base of the manipulator 3. In this determination, for the group determined that its midpoint is within the prohibited region, the control unit 21 lowers the assigned priority to a lowest rank (a value larger by 1 or 2 than a maximum value at that time).

Regarding a relationship between the midpoint of the group and the prohibited region, a case is also conceivable in which only a vicinity of the midpoint is located within the prohibited region and most of the group is outside the prohibited region. For this reason, it is preferable that, even if the vicinity of the midpoint of the group is within the prohibited region, when a certain proportion or more (for example, 70% or more) of a length of the group is outside the prohibited region, the control unit 21 does not lower the priority and executes processing of setting again a gripping position candidate of the group to a point that is outside the prohibited region and closest to the midpoint.

The control unit 21 can also use, as a criterion for determination in adjusting the priority, information as to whether or not a periphery of the group is raised in the sheet material Z.

Since the control unit 21 can estimate a vertical relationship among respective regions of the sheet material Z at the stage of the brightness recognition step S21, by using this, when there is a region of the sheet material Z that is higher than the grouped bounding box B in the vicinity of the grouped bounding box B, the priority of the group is lowered.

This can prevent the situation in which, when the sheet material Z is gripped and lifted by the manipulator 3, the sheet material Z does not spread properly, thereby hindering work in a step (including a placement step described later) after the present invention.

In order to recognize the shape of the sheet material Z at this time with higher accuracy, the processing system Y may be configured to capture an image of the sheet material Z with a plurality of imaging units 1 and handle the shape of the sheet material Z by topography.

In the priority assignment step S31, after assigning priorities, the control unit 21 preferably performs processing to lower the priority for the group of bounding boxes B (or rather, feature amounts F) that satisfies a predetermined condition.

The "predetermined condition" herein is, for example, a case where the feature amounts F in the group are located along a short side of the sheet material Z, or a case where the length over which the bounding boxes B are continuous is equal to or less than a certain value. By lowering the priorities assigned to these, it is possible to prevent a situation in which the sheet material Z hangs down along the long side and a height lifted by the manipulator 3 becomes higher than necessary, and a situation in which, due to gripping a portion of the edge element ZF having a short exposed length, the sheet material Z does not spread when lifted by the manipulator 3.

In the gripping position determination step S32, the control unit 21 determines either the detected feature amount F or the estimated edge ZH as a position at which the sheet material Z is gripped by the end effector 31. As an example, the control unit 21 selects one point among the feature amounts F as the gripping position and determines the XY coordinates thereof. At this time, it is preferable that the method is capable of determining the gripping position based on a predetermined criterion, such as a vicinity of an intermediate point, among the feature amounts F or the edges ZH whose continuity has been identified.

In the gripping position determination step S32, the control unit 21 determines, as the gripping position, a midpoint (or a reset gripping position candidate) of a group having a smallest priority value, based on the priorities for the respective groups that have been assigned in the priority assignment step S31 and further adjusted.

The gripping operation step S4 (corresponding to the gripping operation unit P4) includes a gripping step S41, a lifting step S42, and a delivery step S43. In the gripping operation step S4, the control unit 21 operates (controls) the manipulator 3 to grip the sheet material Z and deliver the sheet material Z to the next step.

In the gripping step S41, the control unit 21 controls the manipulator 3 to grip, with the end effector 31, the gripping position of the sheet material Z determined in the position determination step S3. However, since the gripping position determined in the position determination step S3 is merely XY coordinates on the image, the control unit 21 converts the coordinates into coordinates corresponding to the manipulator 3. As for the Z coordinate of the manipulator 3, a value specified in advance, or a value determined using a vertical height estimated from a captured image, and the like are assumed. At the location specified as described above, the manipulator 3 grips the sheet material Z with the end effector 31. Furthermore, the control unit 21 may adjust an orientation of the end effector 31 such that a direction in which the gripper opens is perpendicular or parallel to the edge element ZF.

In the lifting step S42, the control unit 21 lifts the sheet material Z gripped by the end effector 31 to a predetermined height. This lifting height may be a height specified in advance, or may be a value appropriately changed depending on a state of the sheet material Z. This makes edges and corners of the sheet material Z more likely to be exposed in a state of hanging down, thereby making it possible to create a state in which it is easy to execute the next step (work of placing the sheet material Z in a state in which the corners of the sheet material Z are exposed).

In the delivery step S43, the control unit 21 delivers the lifted sheet material Z from the manipulator 3 gripping the sheet material Z in the present invention to a downstream-side manipulator that executes the next step. At this time, it is preferable that the manipulator 3 causes the downstream-side manipulator to grip a location near the gripping position of the sheet material Z and delivers the sheet material Z in a hand-to-hand manner. Thus, the shape of the lifted sheet material Z can be maintained as much as possible.

The processing method X according to the present embodiment may have, as a processing step subsequent to the gripping operation step S4, the placement step of placing the delivered sheet material Z with the edge ZH or a corner portion exposed. Thus, a folding manipulator provided immediately after the present invention can mechanically grip the corner of the sheet material Z and easily perform a folding operation. Further, the placement step requires the program P for the processing device 2 to execute the processing, a downstream-side manipulator, and a movable placement table, and can be executed after these are added to the present invention.

The processing method X according to the present embodiment may have a modification as described below. However, the modification shown below is merely an example, and the presence or absence of each example is determined independently unless there is a particular dependency relationship.

### <<Modification>>

In determination of a color in a color image, although an RGB color system is used in the above description, another system may be used as long as it is a color system that can be quantified, and for example, a CMYK color system, an XYZ color system, a Lab color system, or the like can be applied. Even in these cases, it is preferable that the control unit 21 is configured to be able to cope with variations due to individual differences and wear of the sheet material Z as described above, and is further configured and methodized to be usable in the detection step S2.

As the configuration capable of coping with variations, for example, it is preferable that a three-point color value feature amount TF is used as the feature amount F. The three-point color value feature amount TF is merely an example of the feature amount F, and an index calculated by another method may be used.

The three-point color value feature amount TF is calculated by the following formula based on a maximum value (MR, MG, MB, ML), a minimum value (mR, mG, mB, mL), and an average value (AR, AG, AB, AL) of a distribution of respective RGB values and/or brightness (hereinafter handled with letter L) according to an RGB color system (which may be another color system) of each pixel in a predetermined region in an image. $R component feature amount = \left(MR-mR\right) / AR$ $G component feature amount = \left(MG-mG\right) / AG$ $B component feature amount = \left(MB-mB\right) / AB$ $L component feature amount = \left(ML-mL\right) / AL$

As described above, it is possible to maintain accuracy in detecting the feature amount F regardless of the shape of the sheet material Z, a positional relationship with the light source unit, or deterioration of the sheet material Z.

The processing device 2 and/or the detection unit P2 may include an abnormal placement notification unit. When the feature amount F cannot be detected by the detection unit P2 (and the detection step S2) due to the shape of the sheet material Z, this abnormal placement notification unit notifies the user to that effect, and requests repositioning of the sheet material Z so that the edge element ZF can be imaged. A form of the notification is assumed to be, for example, displaying a pop-up or the like on the display unit 4, emitting sound from the separately provided speaker, or the like.

The processing method X according to the present embodiment may be a mode in which, in the image acquisition step S1, the sheet material Z is imaged by a plurality of cameras, topography of the sheet material Z is acquired, and, using the topography, the detection step S2 and the position determination step S3 are executed. At this time, it is as described above up to the detection step S2, but in the position determination step S3, particularly in the priority assignment step S31, the control unit 21 can use the "height" of the bounding box B based on the topography.

In the priority assignment step S31 in this case, the control unit 21 determines an order of priority by using a group length, an intermediate point, and a highest point for each group of bounding boxes B grouped in the distinction step S25.

For example, with respect to the group length, the control unit 21 increases a priority of a group having a length equal to or greater than a preset value, and, with respect to the highest point, identifies a highest point within each group and further determines a positional relationship with the intermediate point.

In response to this, the control unit 21, as a general rule, increases a priority of a group having a greatest height of a highest point, and assigns the priority so that the edge element ZF located at the highest position can be gripped.

However, when a predetermined condition is satisfied, such as a case where a distance between a highest point and an intermediate point within a group is extremely large (there is a possibility that, if the highest point is near an end portion of the group, and the highest point is gripped, a vicinity of a center of the edge element ZF cannot be gripped), the control unit 21 executes processing of assigning priorities by using the intermediate point instead of the highest point and determining the gripping position.

The processing method X (processing system Y) according to the present embodiment may have a learning step for improving the accuracy of the detection step S2 and the position determination step S3, instead of a processing step using a preset reference such as a three-point color value feature amount TF.

This learning step is, for example, a step in which teacher data is caused to be read into the processing system Y, and the control unit 21 determines and optimizes parameters for detecting the feature amount F and identifying continuity. Specifically, in this learning step, for the image obtained by imaging the sheet material Z, pixels that are the feature amount F and continuity are identified by human processing, and a data set of a labeled image and an original image is used as the teacher data.

Each learning step described above is merely a specific example, and the processing method X (processing system Y) according to the present invention may include an existing learning algorithm such as YOLO (registered trademark), YOLACT, or MASK-RCNN.

In addition to the above, the processing system Y may include a learning step of, while processing the sheet material Z, feeding back data as a result thereof to improve the accuracy of the detection step S2 and the position determination step S3. The learning step in this case is assumed to include a feature amount detection pattern learning step L1, a continuity identification pattern learning step L2, and a gripping position determination pattern learning step L3. Hereinafter, each learning method will be described in detail.

The feature amount detection pattern learning step L1 is a learning step for detecting the feature amount F appearing in an image, particularly for more accurately detecting a portion corresponding to the edge element ZF in segment assignment (segmentation).

Assuming a case where processing is actually performed, due to how light is applied to the sheet material Z, wear of sewing of the sheet material Z, and the like, individual differences occur also in how the feature amount F appears in the image, which can reduce the accuracy of the segmentation. Therefore, in processing of the feature amount detection pattern learning step L1, the control unit 21 uses, as an input data set in association with a segmentation region, a combination of a brightness value for each pixel and an RGB value (preferably the three-point color value feature amount TF), stores the input data set in the storage unit 22, and thereafter associates the input data set with a state when the sheet material Z is lifted in the subsequent lifting step S42.

At this time, the state of the sheet material Z is imaged by a lifted-state imaging unit, and a penalty (negative value) is linked to the data set if a vertical-direction length of the sheet material Z is equal to or greater than a predetermined value, and a reward (positive value) is linked to the data set if the vertical-direction length is less than the predetermined value. The control unit 21 repeats this for each series of processing, and reproduces, by segmentation, a state close to the data set when the reward is being obtained. Thus, the feature amount F can be detected more accurately regardless of the individual differences of the sheet material Z.

The continuity identification pattern learning step L2 is a learning step for more accurately identifying continuity of the feature amount F in the continuity identification step S24.

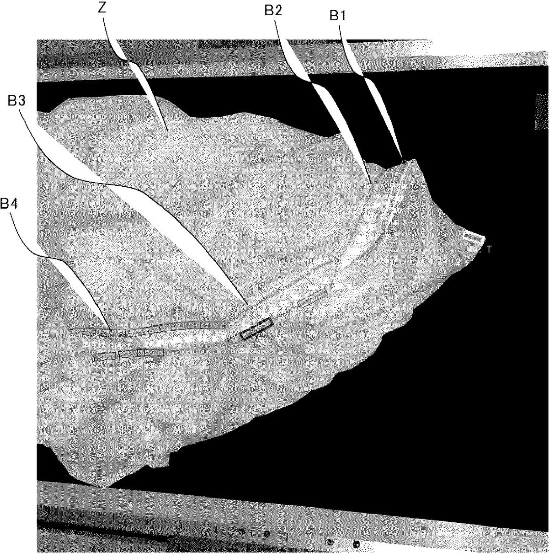

For example, in FIG. 7, a third group bounding box B3 and a fourth group bounding box B4 are highly likely to be determined by the user to be continuous. In addition, there is a case where the edge elements ZF that are originally continuous are blocked by an overlapped portion folded upward depending on how the sheet material Z is curled, and are determined to be discontinuous on the image.

In order to solve this, the continuity identification pattern learning step L2 learns the pattern as described above and detects the feature amount F that is continuous for a longer length.

In processing of the continuity identification pattern learning step L2, the control unit 21 stores, in the storage unit 22, positions and orientations of grouped bounding boxes B and information of segments belonging thereto, and further stores, in the storage unit 22, the positions and orientations and the information as a data set in combination with the distribution of colors (brightness values, RGB values, etc.) in the image.

The control unit 21 associates this data set with the state of the lifted sheet material Z similar to that described above, and reward/penalty data. The control unit 21 repeats this for each series of processing, and reproduces, in the continuity identification step S24, a state close to the data set when a reward is being obtained. Accordingly, regardless of individual differences of the sheet material Z, the continuity of the feature amount F can be detected more accurately, and a more appropriate gripping position can be determined.

The gripping position determination pattern learning step L3 is a learning step for improving a probability of being able to determine a more appropriate gripping position in the position determination step S3.

In the position determination step S3, the control unit 21 determines, as the gripping position, the feature amount F having continuity that satisfies a predetermined criterion, and associates data used therefor, for example, a data set in which coordinate data of an end portion and an intermediate point of a group of bounding boxes B and coordinate data of a positional relationship among groups are collected, with the state of the lifted sheet material Z similar to that described above, and reward/penalty data.

The control unit 21 repeats this for each series of processing, and optimizes the gripping position determination process by, for example, applying variation to the coordinate data so as to perform the processing of the position determination step S3 in a state close to the data set when a reward is being obtained. Accordingly, a more appropriate gripping position can be determined regardless of individual differences of the sheet material Z.

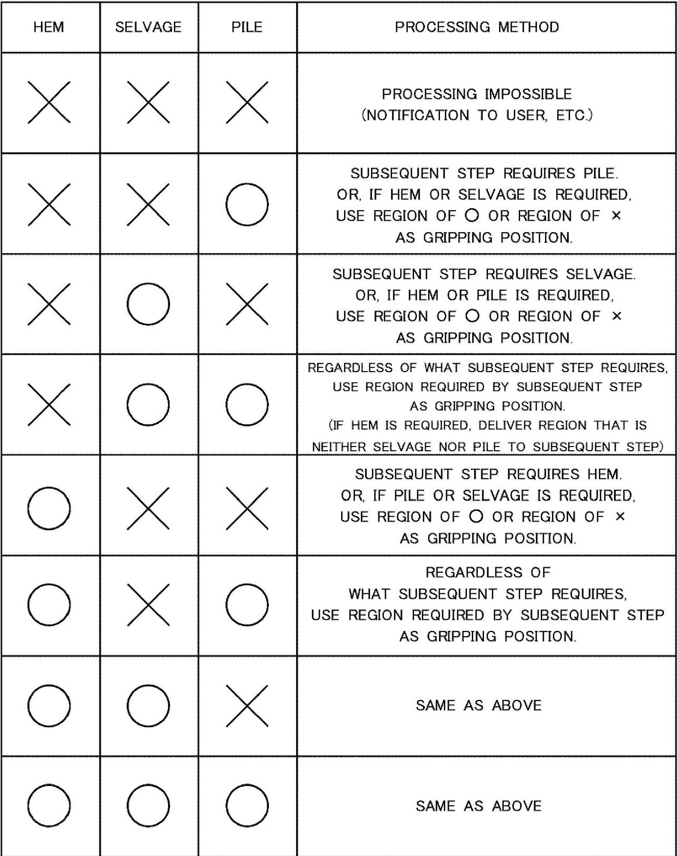

When the sheet material Z handled in the present invention is a plain towel or the like, as described above, the edge element ZF and the feature amount F correspond to a hem, a selvage, and a pile, and the control unit 21 in the detection step S2 detects these. At this time, the processing performed by the control unit 21 from the detection step S2 to the position determination step S3 can be classified into cases as in a table shown in FIG. 8.

When applying the case classification shown in FIG. 8 to the present embodiment, in the position determination step S3, it is assumed that a portion to be preferentially determined as the gripping position among a hem, a selvage, and a pile is set in advance.

In addition, in FIG. 8, a circle mark indicates a state in which each feature amount F could be recognized, and a cross mark indicates a state in which each feature amount F could not be recognized.

A first row of the table shown in FIG. 8 indicates a case where the control unit 21 could not detect any of a hem, a selvage, and a pile. At this time, the control unit 21 determines that subsequent processing cannot be performed, in other words, that the process cannot proceed to the position determination step S3.

Thereafter, the control unit 21 executes processing such as removing the sheet material Z from a line of the conveyance unit 5, or notifying the user of an error and requesting that the sheet material Z be placed again in a state in which some feature amount F can be detected. However, it is preferable that the control unit 21 can perform processing of operating the manipulator 3 to change how the sheet material Z is curled (placement state).

A second row, a third row, and a fifth row of the table shown in FIG. 8 indicate a case where the control unit 21 has detected any one of a hem, a selvage, or a pile. At this time, the control unit 21 compares it with the portion to be preferentially used as the gripping position in the position determination step S3. When this setting of the gripping position matches the type of the detected feature amount F, the control unit 21 determines the gripping position from the feature amount F.

For example, when the portion to be preferentially used as the gripping position is set to be the selvage and the feature amount F detected by the control unit 21 also relates to the selvage, the control unit 21 determines the gripping position from the feature amount F relating to the selvage in the position determination step S3.

When the setting of the gripping position differs from the type of the detected feature amount F, the control unit 21 determines a gripping position from a region in which the feature amount F has not been detected, based on another criterion. As this criterion, for example, it is assumed that a widest identical region is used as the gripping position in the brightness recognition step S21, for example.

A fourth row, a sixth row, and a seventh row of the table shown in FIG. 8 indicate a case where the control unit 21 has detected any two of a hem, a selvage, or a pile. At this time, the control unit 21, similarly to the above-described case, compares it with the portion to be preferentially used as the gripping position in the position determination step S3. When this setting of the gripping position matches the type of the detected feature amount F, the control unit 21 determines the gripping position from the feature amount F.

When the setting of the gripping position differs from the type of the detected feature amount F, the control unit 21 estimates, from the two types of detected feature amounts F, a position of the remaining one feature amount F, or a gripping position in place thereof, and determines a gripping position therefrom.

An eighth row of the table shown in FIG. 8 indicates a case where the control unit 21 detects three types of a hem, a selvage, and a pile. In this case, the control unit 21 determines a gripping position in accordance with the portion preferentially set as the gripping position in the position determination step S3.

The processing method X (including modified examples) described above is represented and executed by the program P that can be processed by a computer.

Hereinafter, examples in which the processing method X according to the present embodiment is executed will be described in detail with reference to the drawings. Further, each of the following examples is an example of the processing for executing the present embodiment, and a mode and an order of steps may be changed.

### <<Example 1>>

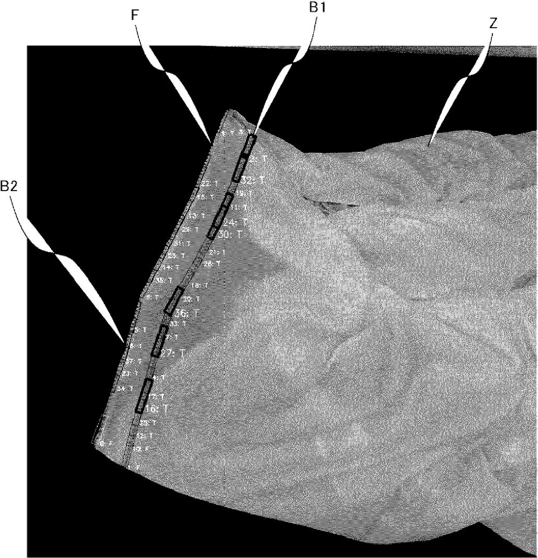

FIG. 6 is an image obtained by imaging the sheet material Z with the imaging unit 1 and further trimmed by the control unit 21. At this time, the edge element ZF of the sheet material Z is captured as the feature amount F in the image. In response to this, the control unit 21 detects the feature amount F in the detection step S2.

Since the edge element ZF in the present example is a colored thread, as described above, the three-point color value feature amount TF using an RGB color system or the like is used.

The control unit 21 assigns the bounding box B to the feature amount F detected as described above in the assignment step S23. Here, when the control unit 21 performs processing of the distinction step S25, in the assignment step S23, the control unit 21 assigns bounding boxes B of different groups, such as a first group bounding box B1 and a second group bounding box B2.

Further, in the continuity identification step S24, the control unit 21 combines the bounding boxes B in each of the first group bounding box B1 and the second group bounding box B2, and identifies continuity of each feature amount F.

When a plurality of types of feature amounts F are captured in the image, the control unit 21 executes processing of the distinction step S25. In the example in FIG. 6, modes (visual modes of the edge elements ZF) of the feature amounts F to which the first group bounding box B1 and the second group bounding box B2 are assigned are different from each other. Such a difference in mode is detected based on elements such as, for example, a difference in color of the feature amount F (distribution of respective RGB values), a difference in position (continuing in parallel such that an intersection point, a merging point, or the like is not recognized), and a difference in sewing pattern (for example, one is sewn in a straight line, whereas the other is sewn in a zigzag manner).

After the first group bounding box B1 and the second group bounding box B2 are recognized, in the shape estimation step S26, the control unit 21 estimates the long side and the short side of the sheet material Z. Further, even when processing of the shape estimation step S26 is not performed, in the position determination step S3, the position of the edge ZH of the sheet material Z is estimated in the shape estimation step S26. Through the above processing, the control unit 21 determines, as a gripping position to be gripped by the manipulator 3, the position of any one of the feature amounts F or the estimated position of the edge ZH.

In the priority assignment step S31, the control unit 21 assigns a priority to a group of bounding boxes B to be set as the gripping position, based on information obtained by processing of the shape estimation step S26, the information for estimating the edge ZH of the sheet material Z and its length and shortness, and information such as a position and a mode of the corresponding feature amount F.

This priority is a numerical value as described above, and, for example, the control unit 21 assigns priority "1" to the second group bounding box B2 in FIG. 6 and assigns priority "2" to the first group bounding box B1. In this case, the control unit 21 estimates that the second group bounding box B2 is closer to the edge ZH of the sheet material Z than the first group bounding box B1, and thereby assigns a small priority value to the former.

In the gripping position determination step S32, the control unit 21 determines a gripping position from a group of bounding boxes B having a small priority value, in the example of FIG. 6, from the second group bounding box B2. At this time, the gripping position to be determined may be selected from an arbitrary position on the second group bounding box B2, or may be selected from a position separated by a predetermined distance (e.g., 10 mm) from the second group bounding box B2 toward the edge ZH of the sheet material Z.

Further, in the gripping position determination step S32, the control unit 21 preferably determines, as the gripping position, a position near a center of the second group bounding box B2, and more preferably, when the corner of the sheet material Z is recognized at an end portion of the second group bounding box B2, determines, as the gripping position, a position shifted from the center of the second group bounding box B2 to a side opposite to the corner.

By such a method, the end effector 31 can more easily grip, among sides of the sheet material Z, a vicinity of a midpoint thereof, and it is possible to suppress a height by which the sheet material Z is lifted by the manipulator 3 and to suppress a space required for work to be low. In addition, it is possible to suppress a possibility that the sheet material Z lifted and hanging down contacts surrounding devices and is caught, thereby hindering the work.

### <<Example 2>>

FIG. 7 shows a state in which the first group bounding box B1, the second group bounding box B2, the third group bounding box B3, and the fourth group bounding box B4 are assigned to respective feature amounts F, and continuity of each is identified.

In particular, in the state shown in FIG. 7, end portions of the respective groups of the second group bounding box B2 to the fourth group bounding box B4 are proximate to each other, and appear to the user as if there is continuity.

In such a case, it is preferable that the control unit 21 perform processing for identifying continuity between groups on the condition that end portions of the groups are separated from each other by a predetermined length (number of pixels) or less. Alternatively, in the priority assignment step S31, it is preferable that the control unit 21 assign respective priorities to the second group bounding boxes B2 to the fourth group bounding boxes B4 in consecutive numbers.

However, in the above case, the control unit 21 assigns a smallest priority to the group located at a center. That is, in the state of FIG. 7, the control unit 21 assigns priority "1" to the third group bounding box B3, assigns priority "2" to the fourth group bounding box B4, and assigns priority "3" to the second group bounding box B2.

By such a method, in the position determination step S3, the control unit 21 can easily select, as the gripping position, a vicinity of a center of the edge elements ZF having continuity.

Hereinafter, the processing method X according to the second embodiment of the present invention will be described in detail with reference to the drawings. However, for contents common to the first embodiment, same reference signs are used and description thereof is omitted.

### <<Second Embodiment>>

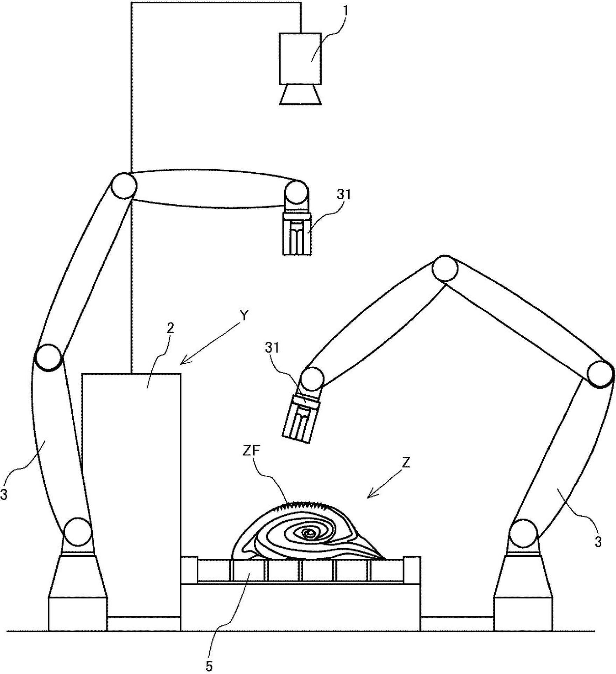

As illustrated in FIG. 9, the processing system Y according to the present embodiment includes two manipulators 3. Correspondingly, also in the position determination step S3, the control unit 21 determines two gripping positions, that is, sets of coordinates.

In the gripping position determination step S32 in the present embodiment, the control unit 21 determines two gripping positions from a group having a high priority. At this time, the gripping positions (a set of coordinates indicating points) are determined such that two points to be gripped are separated by a predetermined linear distance. Here, the "predetermined linear distance" is a length determined by a size of the end effector 31, a size of a gripper included in a downstream manipulator that grips the sheet material Z in the next step of the present invention, an extension length required in another subsequent step, and the like.

In the gripping position determination step S32, there is a case where a length of a group selected based on priority is shorter than the "predetermined linear distance" for determining gripping positions.

In this case, the control unit 21 first changes the group to be used to a next priority. If the gripping positions still cannot be determined, the control unit 21 uses information related to the shape of the sheet material Z obtained in the detection step S2 (in particular, the brightness recognition step S21 and the shape estimation step S26) to determine, as the gripping positions, a set of points (for example, two points) separated by a predetermined geodesic distance (it is assumed that an estimated value is used, but an actually measured value is preferable when actual measurement is possible) in an arbitrary group (outside the prohibited region). This geodesic distance is a distance between two points separated by a predetermined distance along a surface of the sheet.

When the number of manipulators 3 of the processing system Y according to the present embodiment increases to three or more, the number of gripping positions to determined is also configured to increase in correspondence with the number of the manipulators 3. The control unit 21 also executes processing for determining each point (a set of coordinates) of the gripping positions related to the gripping position determination step S32, similarly to the above-described processing.

### EXPLANATION OF REFERENCES

X: processing method;
Y: processing system;
1: imaging unit;
2: processing device;
3: manipulator;
4: display unit;
5: conveyance unit;
P: program;
P1: image acquisition unit;
P2: feature amount detection unit;
P3: position determination unit;
P4: gripping operation unit;
S1: image acquisition step;
S2: detection step;
S3: position determination step;
S4: gripping operation step;
F: feature amount;
B: bounding box;
Z: sheet material;
ZF: edge element; and
ZH: edge.

## Claims

1. A processing method for causing a computer to execute processing for determining a gripping position, which is appropriate, on a sheet material in an arbitrary state, the processing method comprising:
an image acquisition step of imaging the sheet material to acquire image data;
a detection step of detecting feature amounts included in the image data; and
a position determination step of determining the gripping position by using the feature amounts.

2. The processing method according to claim 1, wherein
the detection step determines a segment of edge elements included in the sheet material by using the feature amounts, and
the position determination step determines the gripping position based on the segment.

3. The processing method according to claim 2, wherein
the edge elements are provided along an edge of the sheet material,
the detection step determines continuity of a plurality of segments, including the segment, and groups a plurality of segments, including the segment, determined to have the continuity into a group, and
the position determination step determines the gripping position by using an element of the group.

4. The processing method according to claim 2, wherein
the sheet material has the edge elements that are distinguishable for each edge,
the detection step distinguishes each of the edge elements from the feature amounts into groups, and
the position determination step determines, as the gripping position, one point that matches a predetermined condition, from a feature amount corresponding to each of the groups.

5. The processing method according to claim 3, wherein
when a plurality of gripping positions, including the gripping position, are determined, the position determination step determines, as the gripping positions, a set of points that are separated from each other by a predetermined linear distance in the segments determined to have the continuity.

6. The processing method according to claim 3, wherein
when a plurality of gripping positions, including the gripping position, are determined, the position determination step determines, as the gripping positions, a set of points that are separated from each other by a predetermined geodesic distance in the segments determined to have the continuity.

7. A program for determining a gripping position, which is appropriate, on a sheet material in an arbitrary state by causing a computer to function as:
an image acquisition unit that images the sheet material to acquire image data;
a detection unit that detects the feature amounts included in the image data; and
a position determination unit that determines the gripping position of the sheet material by using the feature amounts.

8. A processing system in which a computer executes processing for determining a gripping position, which is appropriate, on a sheet material in an arbitrary state, the processing system comprising:
an image acquisition unit that images the sheet material to acquire image data;
a detection unit that detects the feature amounts included in the image data; and
a position determination unit that determines the gripping position by using the feature amounts.
